# EUROPEAN PATENT SPECIFICATION

(11) **EP 1 503 286 B1**
(45) Date of publication and mention of the grant of the patent: **03.09.2014**
(21) Application number: 03291941.7
(22) Date of filing: 30.07.2003
(51) Int. Cl.: G06F 9/455

(54) **Multiple operating system networking**
Vernetzung mehrerer Betriebssysteme
Réseau de plusieurs systèmes d'exploitation

(43) Date of publication of application: 02.02.2005
(73) Proprietor: Jaluna SA, 78180 Montigny-le-Bretonneux (FR)
(72) Inventor: Grouzdev, Vladimir, 78100 Saint-Germain-en-Laye (FR); Boule, Yvan, 75011 Paris (FR)
(74) Representative: Rummler, Felix

(56) References cited:
- EP-A- 1 054 322
- EP-A- 1 059 582
- US-B1- 6 330 616
- NIEH J ET AL: "EXAMINING VMWARE" DR. DOBB'S JOURNAL, M&T PUBL., REDWOOD CITY, CA,, US, vol. 25, no. 8, August 2000 (2000-08), pages 70,72-74,76, XP009002403 ISSN: 1044-789X

## Description

This invention relates to networking from a computer which is arranged to run multiple operating systems. In a conventional computer, a network interface card (NIC) is provided, which couples the computer to a network. The NIC is arranged to communicate data over the network according to the network protocols; for example, it may be an Ethernet network interface card. The computer has a physical address on the network (the MAC address).

The computer runs an operating system, which provides an applications programming interface (API) allowing application programs to use the resources of the computer (including the NIC). To achieve this, the operating system provides driver routines (normally separate programs) which directly control the resources of the particular computer platform. Many operating systems provide routines for communicating using Internet protocols ("IP") (i.e. an IP stack). The use of Internet protocols allows the computer to communicate across multiple networks. The computer is assigned an IP address which is a logical address different from the physical MAC address.

The best known operating systems (e.g. Microsoft Windows ™ and Linux™) are "general purpose" operating systems suitable for running a wide range of applications on a wide range of platforms (with suitable driver programs). Additionally, such operating systems often provide multi-tasking; in other words, they allow several applications programs to operate concurrently. To do so, they provide scheduling; in other words, they share the usage of the resources of the computer between the different applications programs, allocating time to each in accordance with a scheduling algorithm.

Such operating systems are very widely used, and therefore have a large base of applications programs from which a user can select, written to run on the operating system. They are therefore the first choice for most applications.

However, for some applications, it is critical that steps in the program are performed within defined time periods, or at defined times. Examples of such programs are control programs for operating mobile telephones, or for operating private branch exchanges (PBXs) or cellular base stations. Typically, the program must respond to external events or changes of state in a consistent way, at or within a certain time within the event. This is referred to as operating in "real time". General purpose operating systems are unsuitable for operating in real time, and are not adapted to do so.

For such tasks, therefore, real time operating systems have been developed; one example is ChorusOS (also know as Chorus) and its derivatives. Chorus is available as open source software from:
http://www.experimentalstuff.com/Technologies/ChorusOS/index.html
and Jaluna at
http://www.jaluna.com/

It is described in "ChorusOS Features and Architecture overview" Francois Armand, Sun Technical Report, August 2001, 222p, available from:
http://www.jaluna.com/developer/papers/COSDESPERF.pdf

These operating systems could also be used to run other types of programs. However, users understandably wish to be able to run the vast number of "legacy" programs which are written for general purpose operating systems such as Windows or Linux, without having to rewrite them to run on a real time operating system.

In US 5903752 and US 5721206, an attempt is made to incorporate a real time environment into a non real time operating system by providing a real time multi-tasking kernel in the interrupt handling environment of the non real time operating system (such as Windows).

When attempts are made to use general purpose operating systems, for communication of real time streaming data (for example, streaming audio or video, or voice over Internet (VoIP) data), the results are often unsatisfactory; firstly, because the operating system may simply not be able to operating fast enough, given the other tasks it has to perform, and secondly because the scheduler may unexpectedly deny the IP stack processor resources if another task is scheduled for execution, resulting in transitory data loss.

One attempt to solve this problem has been to provide real time extensions to Linux. One proposal is RT Linux, described in US 5995745 (Yodaiken) or http://www.fsmlabs.com. Another is RTAI (Realtime Application Interface for Linux) for which see:
http://www.aero.polimi.it/∼rtai/applications/ or
http://www.opensource.lineo.com/rtai.html

It is understood that both RT Linux and RTAI can be configured to provide an IP protocol stack, by using the RT NET program, for which see http://www.rts.uni-hannover.de/rtnet/.

Recently, proposals for providing a "multi-personality" system (i.e. a system in which two or more different operating systems run concurrently on the same processor) have been suggested. One is ADEOS (Adaptive Domain Environment for Operating Systems), described in a White Paper at http://opersys.com/ftp/pub/Adeos/adeos.pdf (and in other papers at http://opersys.com/adeos). Another is Jaluna 2, as described in our earlier European application EP 03290894.9, filed on 9 April 2003.

EP 1054332 shows a computer system having a real-time operating system and a general purpose operating system, and switching between them, in which peripheral devices are shared between the operating systems. EP1059582 describes a virtual machine system running a realtime operating system and a general purpose operating system.

US 6330616 describes a mainframe data processing system comprising multiple logical partitions and a port to a network. The port can be accessed by multiple different TCP/IP stacks, each controlled by the software in a different partition, which may be a separate operating system in each partition. The operating systems and TCP/IP stacks run entirely separately, and each stack has its own unique IP addresses.

US 5740438 discloses a data processing system in which multiple partitions share a single network port using a mapping table defining communication paths between the network port and the partitions.

An aim of the present invention is to provide improved network communications. In one aspect, the present invention comprises a computer system according to claim 1, a method according to claim 18 or a computer program product according to claim 19 for providing code for executing that method.

Although this solution might seem inefficient at first sight, since there will inevitably be some processor overhead in running multiple concurrent operating systems, selection of suitable operating systems can improve the efficiency of operating: for example, the first operating system may be a real time operating system, which may support code for time-critical communications such as streaming data communications, and the second operating system may be a general purpose operating system, which may be permitted to communicate non-time critical data, such as signalling or supervisory data. In this example, the first (Real-Time) operating system is naturally designed to guarantee determinism and to offer higher performances to streaming data transmission than general purpose systems.

Thus, by providing multiple concurrently running operating systems with shared access to the network, the different operating systems sharing a common logical address, both operating systems can be managed together to use the same, common, set of parameters, whereas the activities involved in communicating may be delegated to different operating systems for which they are particularly suited.

In another aspect, the present invention makes use of this flexibility in the context of voice over Internet protocol communications, but using the real time operating system to communicate voice data (for example using user datagram protocol (UDP/IP) transmission with small packets), and the general purpose operating system to provide call set-up and tear-down signalling, and/or call charge signalling. Thus, the real time operating system can guarantee the minimum performance necessary for uninterrupted voice communications whilst the general purpose operating system can communicate in a different, more reliable, protocol (e.g. TCP/IP) at times when the real time operating system does not require the network interface card.

Preferably, in either case, the real time operating system is given preferential access to the NIC. On incoming data, the real time operating system preferably filters all received data packets, and passes on to the general purpose operating system all those which are not uniquely intended for applications running on the real time operating system. Thus, there is no delay whilst time-critical packets are handled. For outgoing data, preferably priority is given to data from the real time operating system.

Other aspects, features, embodiments and advantages of the invention will be apparent from the following description and claims.

Embodiments of the invention will now be illustrated, by way of example only, with reference to the accompany drawings in which:

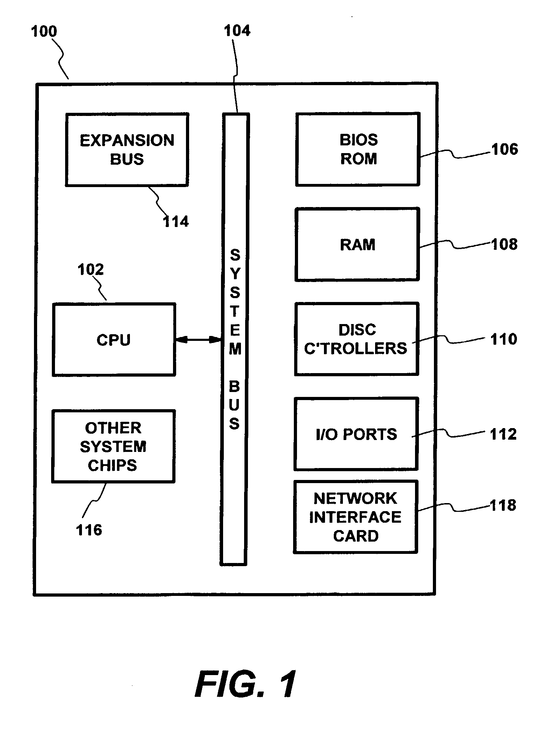

Figure 1 is a block diagram showing a computer system in which the invention may be embodied;

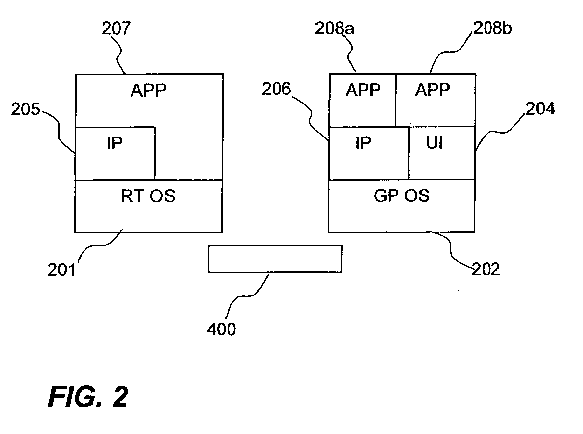

Figure 2 is a diagram showing the operating systems and major components present in a first embodiment;
Figure 3 is a diagram showing in greater detail the software components which take part in network communications in the first embodiment;
Figure 4a is a diagram showing the known structure of an IP packet;
Figure 4b is a diagram showing the known structure of a UDP datagram;
Figure 5 is a flow diagram illustrating the processes performed on booting the operating systems;
Figure 6 is a flow diagram showing the processes performed on starting an application under one of the operating systems (in known fashion);
Figures 7a, 7b and 7c are flow diagrams showing processes performed by the general purpose operating system; and
Figures 8a, 8b and 8c are flow diagrams showing the corresponding processes performed by the real time operating system;
Figure 9 is a block diagram showing a voice over IP (VoIP) network according to the second embodiment of the invention; and
Figure 10 is a diagram showing the software components present in a computer of the IP network embodying the second embodiment.

### Introduction

### System Hardware

A computer system 100 to which the system is applicable comprises a central processing unit (CPU) 102, such as a Pentium 4™ CPU available from Intel Corporation, or PowerPC CPU available from Motorola (the embodiment has been implemented on both), coupled via a system bus 104 (comprising control, data and address buses) to a read-only memory (ROM) chip 106; one or more banks of random access memory (RAM) chips (108); disk controller devices 110 (for example IDE or SCSI controllers, connected to a floppy disk drive, a hard disk drive, and additional removable media drives such as DVD drives); one or more input/output ports (112) (for example, one or more USB port controllers, and/or parallel port controllers for connection to printer and so on); an expansion bus 114 for bus connection to external or internal peripheral devices (for example the PCI bus); and other system chips 116 (for example, graphics and sound devices). Also provided is a network interface card (NIC) 118, for communicating data via a network (for example, an Internet network).

Examples of computers of this type are personal computers (PCs) and workstations. However, the application of the invention to other computing devices such as mainframes, embedded microcomputers in control systems, and PDAs (in which case some of the indicated devices such as disk drive controllers may be absent) is also disclosed herein.

The computer system is arranged to communicate data to another computer system (which may or may not embody the invention) via the network to which the NIC is connected, and other networks, collectively comprising the Internet. For the purpose of future discussion, the networks will be referred to collectively as the Internet.

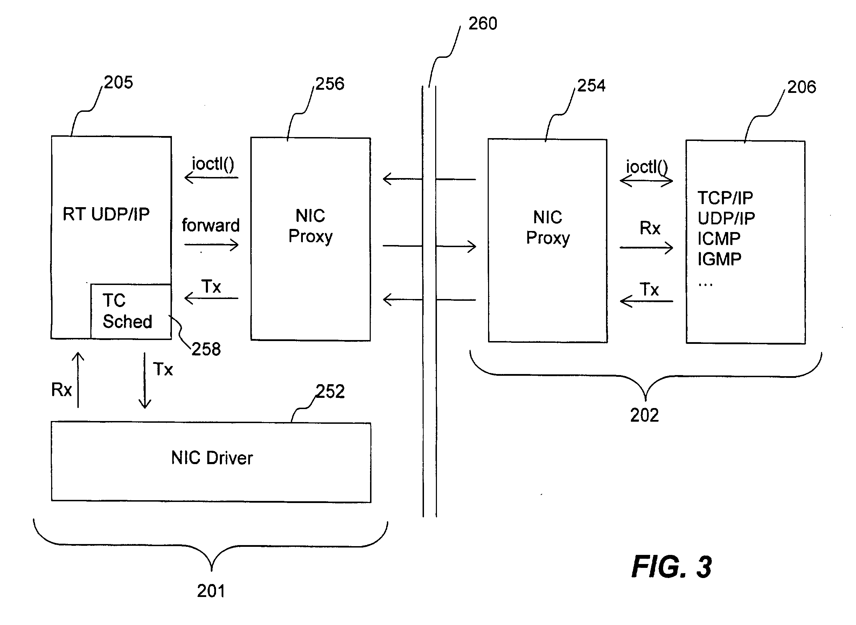

Referring to Figure 3, the invention is arranged to run software comprising the following components:
- A first operating system kernel 201 comprising a real time operating system kernel such as the C5 operating system (the real time microkernel of Jaluna-1, an open-source version of the fifth generation of the ChorusOS system, available for open source, free download from http://www.jaluna.com).
- A general purpose operating system kernel 202, which may be Linux kernel version 2.4.20. The kernels are slightly modified to allow for concurrent execution, in the manner described in our above referenced earlier European patent application 03290894.9.
- A hardware resource dispatcher 400, which is not itself an operating system, but is arranged to load and start each of the multiple operating systems 201, 202 and allocate resources to them, and to schedule their operation (i.e. divide CPU time between them), and to provide an inter-operating systems communication link between them to allow applications running on the different operating systems to communicate with each other (and to allow the operating systems to do the same). Again, full details are given in our above referenced earlier European patent application 03290894.9.

Each operating system provides networking "middleware" software. In this embodiment, the real time operating system 201 provides an Internet protocol (IP) stack, and protocols for operating user datagram protocol (UDP/IP), and RTP/RTCP data communications protocols for running on top of the UDP/IP stack. The UDP/IP stack is, in this embodiment, optimised to operate with small packet sizes, to provide a guaranteed latency (i.e. maximum delay) and bandwidth.

The general purpose operating system 202 provides an IP stack 206, together with UDP/IP protocols, transmission control protocols (TCP/IP), hypertext transfer protocol (HTTP), file transfer protocol (FTP) and so on.

The general purpose operating system provides an operating system user interface or presentation layer 204 (such as X Windows).

Finally, each operating system supports one or more applications 207, 208a, 208b.... The applications make use of the computer resources through the applications programming interface (API) offered by the operating system through which they are operating. The operating systems access hardware resources in the manner described in our above referenced earlier European application 03290894.9. Specifically, they make use of the native device driver programs for each operating system for devices where the operating system has exclusive access, and for devices which must be shared, they make use of the native driver programs of the real time operating system 201.

Thus, each operating system 201, 202 is allocated some CPU time by the hardware resource dispatcher 400 and, within that time, each operating system allocates time between the threads of the applications it is running.

Referring to Figure 3, in the present invention the real time operating system 201 provides a driver program 252 for the NIC. The driver program communicates data from the NIC on to the operating system 201 and communicates data from the operating system 201 to the NIC 118. Although the general purpose operating system 202 would normally have a NIC driver program, in this case it is replaced (as described in our above referenced European application) with a proxy driver program 254 which does not communicate with the NIC, but instead with a further proxy program 256 running on the real time operating system 201.

The two communicate via an inter-operating system communications bus 260 as disclosed in our above referenced earlier European patent application, using shared memory spaces written to by one operating system and read from by the other.

Thus, when applications running on the real time operating system need to communicate, they do so through the NIC driver program 252. When applications running on the general purpose operating system wish to communicate, they do so by passing data through the general purpose operating system proxy 254 to the real time operating system proxy 256, to be handled through the real time operating system NIC driver 252. In the reverse direction, applications running on the general purpose operating system receive their data via the NIC driver 252, the real time operating system protocol stack 205, and the proxy 256, 254, rather than directly from the NIC card.

There are three simplex data communication channels open between the two proxy drivers 254, 256:
1 - a data output channel, for forwarding incoming data packets from the real time UPD/IP stack,
2 - a data input channel to receive outgoing packets and from the general purpose operating system,
3 - a control input channel to receive input/output control requests issued by the general purpose operating system which relate to the NIC. Thus, any changes to the configuration of the network interface which have been instructed by the user through the general purpose operating system 202 are transmitted after the real time operating system 201 which thereafter operates in accordance with the updated network parameters. For example, the Linux IFCONFIG command may be used to change various network parameters; the effect of this is that both operating systems continue to use the same, common, set of parameters. Thus, amongst other things, the same physical (MAC) and IP addresses are assigned to both the real time operating system and the general purpose operating system instances of the NIC.

To achieve this, in this embodiment, the general purpose proxy 254 "snoops" all I/O control calls made by the operating system 202, and sends corresponding messages to the real time proxy 256.

In this embodiment, the general purpose proxy 254 conveniently implements the Linux Ethernet driver internet interface, and it therefore has the same interface as, and can be treated as, a network Linux Ethernet device by the operating system 202.

The real time operating system 201 further provides a transmission scheduler program 258. The function of the transmission scheduler 258 is to decide which data from the general purpose operating system to transmit via the NIC driver 252 or, in more general terms, to allocate transmission capacity between the two operating systems.

Packets from the real time UDP/IP stack are treated as having high priority, and packets from the general purpose operating system (via the proxy drivers 254, 256) are treated as having low priority by the scheduler. The scheduler, in this embodiment, does not transmit any packet from the general purpose operating system if a packet from the real time operating system is awaiting transmission; instead, packets awaiting transmission are queued for subsequent transmission when possible.

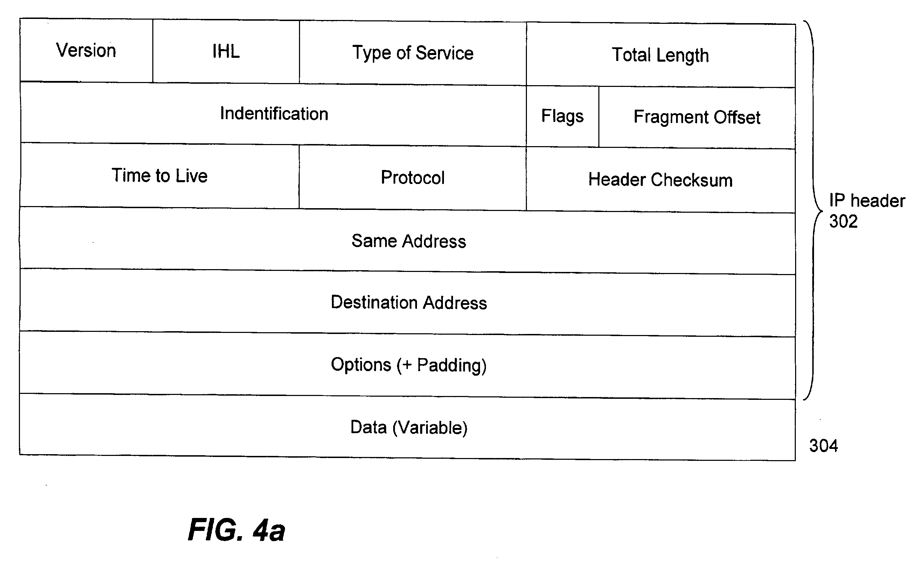

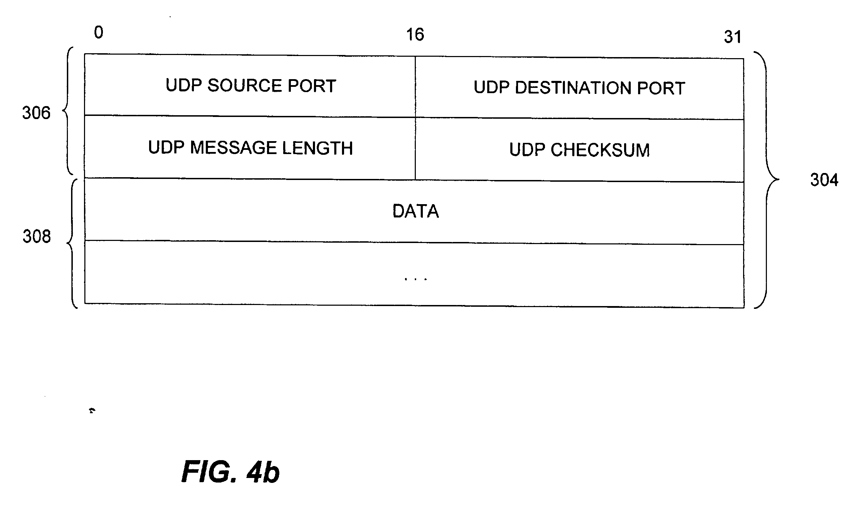

Figure 4a shows the structure of an IP packet. It has a header portion 302 and a data portion 304. Figure 4b shows the structure of a UDP datagram. It occupies the data portion 304 of packet, and consists of a header 306 and data 308. Packets are addressed by IP address and by port number. The NIC receives packets with the relevant IP address and the NIC driver 252 forwards them to the real time UDP/IP stack 205. Each operating system 201, 202 allocates a port number to each application which uses the IP stacks 205, 206. For this purpose, each operating system has a list of port numbers which it can allocate. The two lists of port numbers are mutually exclusive. In this embodiment, they are statistically allocated; that is, each operating system is permanently allocated its list of ports.

Various types of IP packet will be received by the NIC 118. These include broadcast packets, which are intended for, and received by, all computers in the network, and packets which are addressed to the computer 100. The later include UDP datagrams intended for applications running on the real time operating system (identified by having port numbers which are allocated by that operating system) and UDP, TCP or other packets having port numbers indicating that they are intended for applications running on the general purpose operating system 202.

The real time UDP/IP stack 205 is arranged to process packets which are intended for its applications, and supply the payload data to the application concerned. Where it encounters a packet having a port address indicating that it belongs to the general purpose operating system 202, it forwards the packet via the proxy 256, 254 to the TCP/IP stack of the general purpose operating system 202, which routes the pay load of the packet to the application corresponding to the port.

There are packets which contain information relevant to the IP stacks of both operating systems. For example, it is convenient for both operating systems to read ARP reply datagram packets, which contain the physical address corresponding to a given IP address. In this way, each operating system can maintain a table of addresses for use in addressing future packets.

Having described the software components of the embodiment, the operation of the embodiment will now be disclosed.

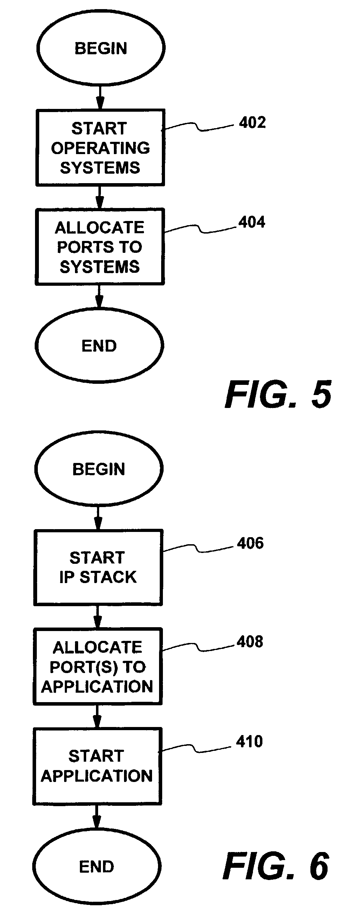

Figure 5 shows the process performed when the computer system is switched on, restarted, reset or rebooted. In a step 402, the operating systems are loaded and started, as discussed in our above referenced earlier European patent application. In step 404, as also discussed therein, various system resources are allocated. Included amongst these resources are a subset of IP ports for each operating system.

Associated with each port is a socket comprising a transmission queue and a reception queue. Packets generated by the application which are to transmitted are held on the transmission queue, and packets received for the application are passed to the reception queue.

In this embodiment, firstly a predetermined list of ports is supplied to the real time operating system 201, and then secondly, a dummy or fake socket is assigned, under the second operating system, to each of these ports. Thus, the general purpose operating system treats the ports as if they were already allocated, and does not allocate them to any application it runs. The subset of ports available for allocation by the secondary operating system therefore corresponds to the total number of ports available except for the ports already allocated to the real time operating system.

Referring to Figure 6, the process performed on starting an application running under one of the operating systems is briefly as follows. The application is loaded. Where it requires communications, the IP stack (if not already running) is started in step 406, as with a conventional operating system. In step 408, the operating system concerned allocates one or more port addresses to the application. This process is as in a conventional operating system, except that the ports allocated are taken from the subset given to that operating system on start up in step 404 above. The application is then started (step 410) as in a conventional operating system.

When an application is closed, the ports used are released for subsequent reallocation if necessary.

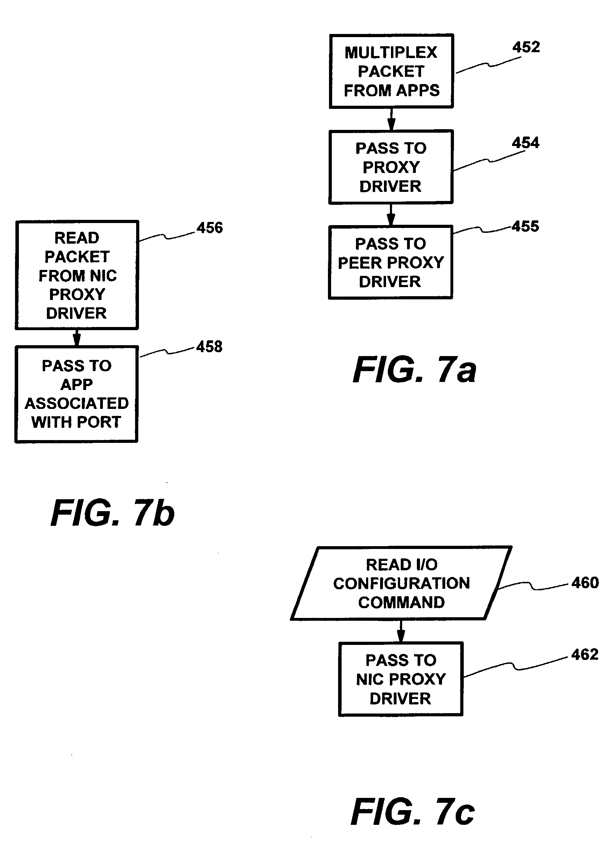

The operation of the embodiment during communications will now be disclosed. The operation of the general purpose operating system 202 is essential conventional, and will therefore be disclosed only briefly with reference to Figure 7, comprising Figures 7a, 7b and 7c.

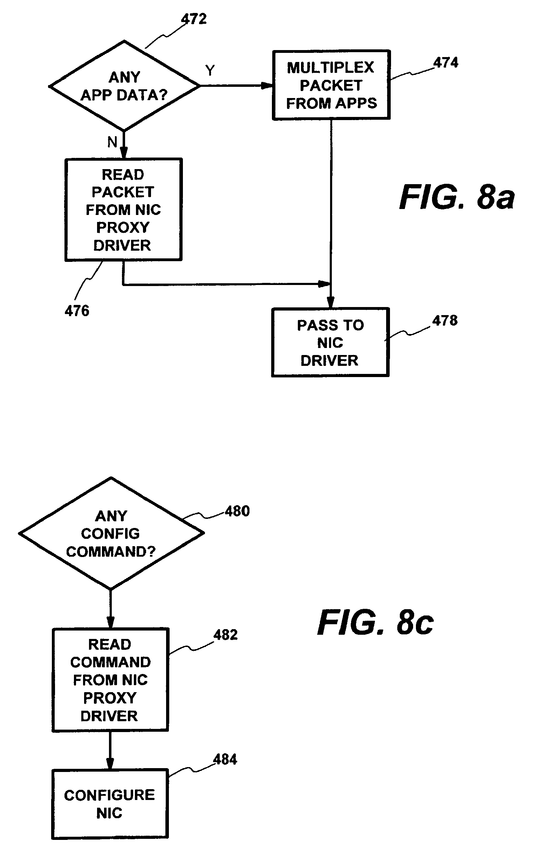

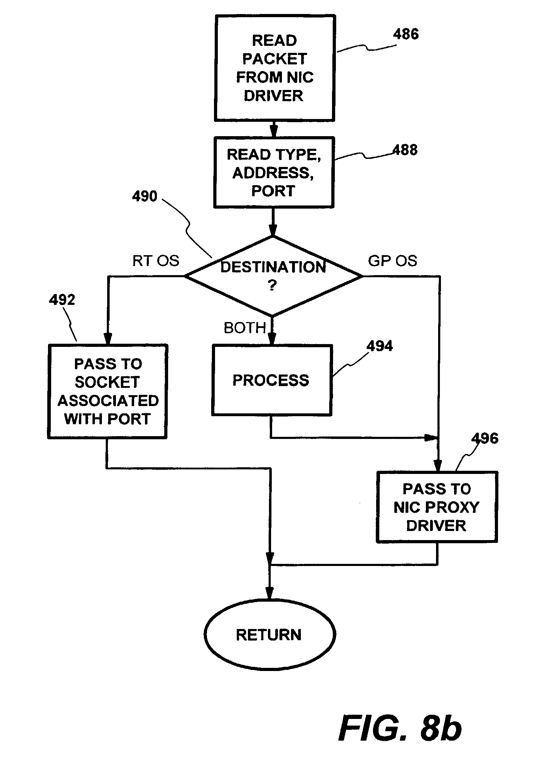

Figure 7a shows the steps associated with transmitting packets to hosts connected to the network. In a step 452, the network stack selects (for example, in multiplex fashion between multiple applications) an IP packet or frame generated by one of the applications 208 running on the operating system. In step 454, the network stack forwards the packet to the network interface proxy driver program 254, which provides it to the real time proxy driver program 256 in step 455. The further handling performed by the real time operating system will be described below with reference to Figure 8.

Figure 7b shows the steps associated with receiving packets from hosts connected to the network. In step 456, a received packet held at the NIC proxy driver 254 is read from it by the general purpose stack and, in step 458, the packet is passed to the socket of the application associated with the packet. The further handling performed by the real time operating system will be described below with reference to Figure 8.

Figure 7c shows the steps associated with configuring the NIC. In step 460, a network interface configuration command entered at the console is read, and in step 462, a corresponding instruction to reconfigure the NIC is passed to the NIC proxy driver program 254. The further handling performed by the real time operating system will be described below with reference to Figure 8.

Referring to Figure 8, comprising Figures 8a, 8b and 8c, the corresponding operation of the real time operating system will now be described.

Figure 8a shows the steps associated with transmitting packets to hosts connected to the network. The real time UDP/IP stack detects whether there is a packet (UDP datagram) from any of the applications it is running (step 472). The stack passes the packet to the NIC driver 252 (step 478). In step 476 the scheduler 258 reads any waiting packet (received from the general purpose operating system as described above in relation to Figure 7) from the NIC proxy 256. In step 478 any such packet is passed to the NIC driver 252 for transmission to the network.

Figure 8b shows the steps associated with receiving packets from the network. Upon receipt of a frame from the network, the NIC triggers an interrupt which makes the CPU execute the Interrupt Handler of the NIC driver in the real-time system. In turn, the Interrupt Handler awakes a specific input thread of the real-time system dedicated to the receipt of input network frames. The input thread reads each received frame and delivers it according to its type and/or to its destination. If the frame is a UDP/IP packet whose destination port is one of the UDP ports initially reserved to the real-time operating system, the packet is immediately queued behind the socket which is bounded to this UDP port.

Referring to Figure 8b, in step 486, the thread reads the packet from the NIC driver 252. In step 488, it reads the packet type and, where the packet includes a port address, the port.

In step 490, the real time operating system determines the destination of the packet. If the frame is a UDP/IP packet whose destination port address is one of the UDP ports reserved to the real-time operating system, the packet is immediately queued to the socket which is bound to this UDP port (step 492).

If the packet is of a type which is of interest to both the real time operating system and the general purpose operating system, then (step 494) it is processed by the real time operating system UDP/IP stack before being provided to the general purpose system. For example, the packet may be an ARP reply packet, carrying the MAC address and IP address of a destination host. In this case, then in step 494 the packet is used by the real time operating system to update its ARP table (i.e. stored table of IP addresses), and then forwarded in step 496 to the NIC proxy driver 254 for forwarding to the general purpose operating system (which will then perform the same ARP table updating task).

All other types of input network frames are directly provided to the NIC proxy driver of the general purpose system to be asynchronously processed by its network stack (step 496). Thus, for example, UDP packets with a non-real time operating system destination ports; TCP packets; and all other packets are forwarded to the real time operating system.

Figure 8c shows the steps associated with configuring the NIC. The real time IP stack 205 checks (step 480) whether there is a new configuration command from the NIC proxy 256 and, if so, reads the command (step 482) and configures the NIC (step 484).

### Second Embodiment

### Voice Over Internet Protocol

A specific application to voice over Internet protocol (VoIP) telephony will now be described, which implements a gateway or "soft switch" between a traditional telephone network and an IP network.

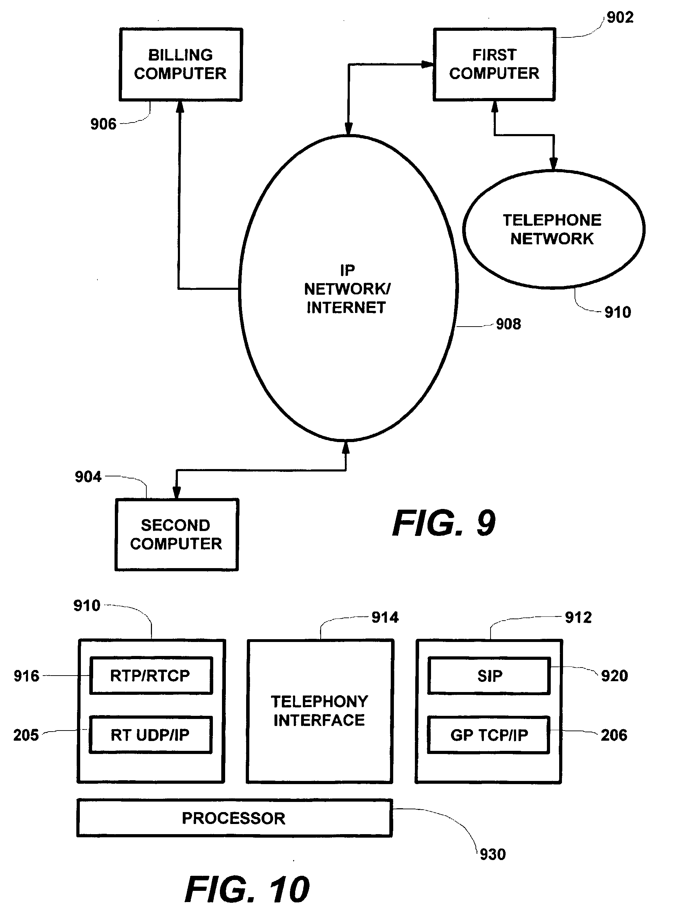

Referring to Figure 9, in this embodiment, a first computer (operating in accordance with the embodiment) 902 acts as a gateway between a telephone network 910 and an IP network (or group of networks interconnected via the Internet) 908. It communicates via the network 908 with a second computer 904 which provides the other end of the voice link (it may be a personal computer running voice over internet protocol software, or another gateway). It also communicates with a billing computer 906 of the VoIP service provider.

Figure 10 shows the additional components present in the first computer 902 above those described in the first embodiment.

Referring to Figure 10, for each duplex voice channel, there is provided a telephone channel system consisting of a VoIP module 910 and a telephony interface module 914, interconnected via a processor module 930.

The telephony interface module 914 depends on the nature of the telephone network 910. For example, for digital telephony, it encodes and decodes a voice signal in pulse code modulation (PCM) format; for a mobile telephone network it encodes and decodes in a low bit rate coding format; and for an analogue telephone network, it comprises analogue to digital converters (ADCs) and digital to analogue converters (DACs).

The VoIP module 910 comprises a program executing RTP/RTCP (real time protocol/real time control protocol) 916 as an application on the real time operating system 201. The RTP/RTCP data is formatted into UDP datagrams by UDP/IP stack 205 (as described above) which is part of the real time operating system IP stack.

The voice data from the telephone network 910 is received at the telephony interface 914, and converted to RTP/RTCP format by the processor 930, which comprises one or more DSP (digital signal processing) devices dedicated to the transconversion task. The transcoded data is then transmitted as UDP datagrams from the gateway computer 902 to the IP network 908, addressed to the IP address of the second computer 904.

In the return direction, UDP datagrams received from the IP network 908 which were addressed to the first computer 902, and have the port address of the VoIP module 910, are transcoded by the processor 930 and supplied to the telephony interface 914 and thence to the telephone network 910 to provide the return channel.

The control engine 914 comprises a program running SIP (session initiation protocol), a signalling protocol for Internet telephony, event notification and other communications. It is an application running on the general purpose operating system 202 and operating through the general purpose operating system TCP/IP stack 206. The control subsystem 912 is arranged to set up a call session with the second computer 904 by signalling, through the IP network 908, to and from the second computer 904 and the billing computer 906. Similarly, it is arranged to tear down the call when the call is complete.

In operation, when a call is initiated from the telephone network 910, the signalling information from the telephone network is decoded and used by the SIP engine 920 to set up the call to the second computer, by establishing the IP address of the second computer and passing the IP address of the first computer to the second computer, and notifying the billing computer 906 initiation of the session.

During the call, call data from the telephone network 910 is forwarded through the IP network 908 to the second computer 904 through the interfaces 914, 910; and is supplied in the reverse direction from the second computer 904 to the telephone network 910. During the call, the control subsystem 912 monitors the call, and may supply the results to the user interface 204 of the general purpose operating system 202, and receive network configuration and other control inputs from the user interface 204.

At the end of the call, when the call is terminated from either end, the control subsystem 912 performs tear-down signalling to the telephone network 910 or the second computer 904 (depending on where the call was terminated) and sends a billing message to the billing computer 906 indicating the billing parameters (e.g. duration and destination of call).

The number of call channels, and hence of VoIP and telephony interface modules and processors provided within the first computer 902, will depend upon its purpose. It may be a stand alone computer telephone integration (CTI) terminal offering a single channel, or a PBX offering a small number of channels, or a network interconnection node offering hundreds of channels or more.

It will be seen that, in this embodiment, by using the real time operating system together with UDP datagrams of constrained size, it is possible to offer a highly reliable, low delay telephony connection. It is also possible to offer control signalling and billing signalling before, during and after the call, via the general purpose operating system, thus enabling complex signalling applications and billing functionality, and making it easy to interact with the user through the user interface 204.

### Other Embodiments And Modifications

It will be apparent from the foregoing that many modifications, variants and substitutions to the embodiments described are possible. For example, whilst operation with IP, Linux and Chorus systems are disclosed, the invention is equally applicable to other communications protocols and to other operating systems which exist or may in future be developed.

Whilst allocation of ports on a static basis has been described, it would be possible dynamically to vary the allocation of ports. For example, the real time operating system could relinquish ports when it had no further need of them, enabling them to be used by the general purpose operating system, by removing the socket assignment of the ports. Likewise, the real time operating system could claim the use of more ports from the general purpose operating system by the same means.

Whilst the operation of two operating systems running concurrently on a single processor has been described, it will be apparent that it would be easy to replace the described inter-operating system bus with a physical communications bus, and to run the operating systems on different processors or different platforms.

Whilst VoIP has been described, other applications such as streaming audio (e.g. music, internet radio etc) and video (e.g. video on demand) can also be provided using the invention.

## Claims

1. A computer system configured for communications, comprising:
a processor (102);
a first operating system (201) running on the processor (102);
a second operating system (202) running on the processor (102); and
a network interface (118) for communicating data,
in which the first and second operating systems are arranged to share usage of the network interface (118);
**characterised in that** the network interface operates using a single set of network addresses common to both operating systems; and
**in that** the system further comprising executable code for providing a data transmission channel for communicating real-time data and associated control and/or supervisory data, in which the code comprises:
first code operating under said first operating system for communicating said real-time data, wherein the first operating system is a real-time operating system arranged to use a UDP/IP protocol stack to communicate said real-time data; and
second code operating under said second operating system for communicating said control and/or supervisory signals, wherein the second operating system is a general purpose operating system arranged to use a TCP/IP protocol stack and for communicating said control and/or supervisory signals wherein the UDP/IP protocol stack of the first operating system is arranged to receive all incoming data, and to selectively forward data having port numbers indicating that they are intended for applications running on the second operating system, to the TCP/IP protocol stack of the second operating system.

2. A system according to claim 1, comprising a transmission scheduler (258) which is arranged to selectively forward outgoing data packets from the first and second operating systems (201, 202) for transmission through the network interface (118).

3. A system according to claim 2, in which the transmission scheduler (258) is arranged to give priority to the first operating system (201).

4. A system according to claim 2, in which the transmission scheduler (258) is arranged not to send any packets from the second operating system (202) while there are packets for transmission from the first operating system (201).

5. A system according to claim 1, which is arranged to communicate using Internet protocols.

6. A system according to claim 1, in which said first and second operating systems (201,202) both operate on a single processor (102).

7. A system according to claim 6, comprising an inter-operating system communications channel (260) for carrying messages between said first and second operating systems (201,202), and/or applications running thereon (207,208).

8. A system according to claim 1, in which the first operating system (201) has a first subset of address ports and the second operating system (202) has a second subset of address ports, each said subset comprising at least one address port, said first and second subsets being mutually exclusive.

9. A system according to claim 1, in which the second operating system (202) provides commands allowing a user to configure the network interface (118).

10. The system of any preceding claim implementing a voice-over-Internet communications system.

11. A method of providing network access to a computer, comprising providing first and second operating systems on the computer, **characterised by** sharing a network address and allowing said operating systems to share access to a network interface of said computer, and by providing executable code for providing a data transmission channel for communicating real-time data and associated control and/or supervisory signals, in which the code comprises:
first code operating under said first operating system for communicating said real-time data, wherein the first operating system is a real-time operating system and arranged to use a UDP/IP protocol stack to communicate said real-time data; and
second code operating under said second operating system for communicating said control and/or supervisory signals, wherein the second operating system is a general purpose operating system and arranged to use a TCP/IP protocol stack and for communicating said control and/or supervisory signals;
wherein the UDP/IP protocol stack of the first operating system is arranged to receive all incoming data, and to selectively forward data having port numbers indicating that they are intended for applications running on the second operating system, to the TCP/IP protocol stack of the second operating system.

12. A computer program product comprising code for causing a computer (100) to perform the method of claim 11.

## Patentansprüche

1. Computersystem, das für Kommunikation konfiguriert ist und Folgendes umfasst:
einen Prozessor (102);
ein erstes Betriebssystem (201), das auf dem Prozessor (102) läuft;
ein zweites Betriebssystem (202), das auf dem Prozessor (102) läuft;
eine Netzwerkschnittstelle (118) zum Kommunizieren von Daten,
wobei das erste und zweite Betriebssystem eingerichtet sind, um die Nutzung der Netzwerkschnittstelle (118) miteinander zu teilen;
**dadurch gekennzeichnet, dass** die Netzwerkschnittstelle mithilfe eines einzelnen Sets von Netzwerkadressen arbeitet, die beiden Betriebssystemen gemeinsam sind; und
dadurch, dass das System ferner ausführbaren Code zum Bereitstellen eines Datenübertragungskanals zum Kommunizieren von Echtzeitdaten und zugehörigen Steuerungs- und/oder Überwachungsdaten umfasst, wobei der Code Folgendes umfasst:
einen ersten Code, der unter dem ersten Betriebssystem zum Kommunizieren der Echtzeitdaten arbeitet, wobei das erste Betriebssystem ein Echtzeit-Betriebssystem ist, das eingerichtet ist, um einen UDP/IP-Protokoll Stack zum Kommunizieren der Echtzeitdaten zu verwenden; und
einen zweiten Code, der unter dem zweiten Betriebssystem zum Kommunizieren der Steuerungs- und/oder Überwachungssignale arbeitet, wobei das zweite Betriebssystem ein Betriebssystem für allgemeine Verwendungszwecke ist, das eingerichtet ist, um einen TCP/IP-Protokoll Stack zu verwenden und zum Kommunizieren der Steuerungs- und/oder Überwachungssignale, wobei der UDP/IP-Protokoll Stack des ersten Betriebssystems eingerichtet ist, um alle eingehenden Daten zu empfangen, und um Daten, die Port-Nummern haben, die darauf hinweisen, dass sie für Anwendungen bestimmt sind, die auf dem zweiten Betriebssystem laufen, selektiv an den TCP/IP-Protokoll Stack des zweiten Betriebssystems weiterzuleiten.

2. System gemäß Anspruch 1, umfassend einen Übertragungsplaner (258), der eingerichtet ist, um ausgehende Datenpakete vom ersten und zweiten Betriebssystem (201, 202) für Übertragungen durch die Netzwerkschnittstelle (118) selektiv weiterzuleiten.

3. System gemäß Anspruch 2, in dem der Übertragungsplaner (258) eingerichtet ist, um dem ersten Betriebssystem (201) Priorität zu geben.

4. System gemäß Anspruch 2, in dem der Übertragungsplaner (258) eingerichtet ist, um keinen Pakete vom zweiten Betriebssystem (202) zu senden, während Pakete zur Übertragung vom ersten Betriebssystem (201) vorhanden sind.

5. System gemäß Anspruch 1, das eingerichtet ist, um mithilfe von Internet-Protokollen zu kommunizieren.

6. System gemäß Anspruch 1, in dem das erste und zweite Betriebssystem (201,202) beide auf einem einzelnen Prozessor (102) arbeiten.

7. System gemäß Anspruch 6, umfassend einen Zwischenbetriebssystem-Kommunikationskanal (260) für den Transport von Nachrichten zwischen dem ersten und dem zweiten Betriebssystem (201,202) und/oder Anwendungen, die darauf laufen (207,208).

8. System gemäß Anspruch 1, in dem das erste Betriebssystem (201) ein erstes untergeordnetes Set an Adress-Ports und das zweite Betriebssystem (202) zweites untergeordnetes Set an Adress-Ports hat, wobei jedes untergeordnete Set mindestens einen Adress-Port hat, wobei sich das erste und das zweite untergeordnete Set gegenseitig ausschließen.

9. System gemäß Anspruch 1, in dem das zweite Betriebssystem (202) Befehle bereitstellt, die es einem Benutzer ermöglichen, die Netzwerkschnittstelle (118) zu konfigurieren.

10. System nach einem der vorhergehenden Ansprüche, das ein Voice-over-Internet-Kommunikationssystem implementiert.

11. Verfahren zum Bereitstellen von Netzwerkzugriff auf einen Computer, umfassend das Bereitstellen eines ersten und eines zweiten Betriebssystems auf dem Computer, **gekennzeichnet durch** eine gemeinsame Verwendung einer Netzwerkadresse, und das Ermöglichen eines gemeinsamen Zugriffs auf eine Netzwerkschnittstelle des Computers für die Betriebssysteme, und **durch** Bereitstellen von ausführbarem Code zum Bereitstellen eines Datenübertragungskanals zum Kommunizieren von Echtzeitdaten und zugehörigen Steuerungs- und/oder Überwachungsdaten, wobei der Code Folgendes umfasst:
einen ersten Code, der unter dem ersten Betriebssystem zum Kommunizieren der Echtzeitdaten arbeitet, wobei das erste Betriebssystem ein Echtzeit-Betriebssystem ist, das eingerichtet ist, um einen UDP/IP-Protokoll Stack zum Kommunizieren der Echtzeitdaten zu verwenden; und
einen zweiten Code, der unter dem zweiten Betriebssystem zum Kommunizieren der Steuerungs- und/oder Überwachungssignale arbeitet, wobei das zweite Betriebssystem ein Betriebssystem für allgemeine Verwendungszwecke und eingerichtet ist, um einen TCP/IP-Protokoll Stack zu verwenden und zum Kommunizieren der Steuerungs- und/oder Überwachungssignale;
wobei der UDP/IP-Protokoll Stack des ersten Betriebssystems eingerichtet ist, um alle eingehenden Daten zu empfangen, und um Daten, die Port-Nummern haben, die darauf hinweisen, dass sie für Anwendungen bestimmt sind, die auf dem zweiten Betriebssystem laufen, selektiv an den TCP/IP-Protokoll Stack des zweiten Betriebssystems weiterzuleiten.

12. Computerprogrammprodukt umfassend Code, der einen Computer (100) veranlasst, das Verfahren nach Anspruch 11 auszuführen.

## Revendications

1. Système informatique configuré pour des communications, comprenant :
un processeur (102) ;
un premier système d'exploitation (201) s'exécutant sur le processeur (102) ;
un deuxième système d'exploitation (202) s'exécutant sur le processeur (102) ; et
une interface de réseau (118) pour communiquer des données,
dans lequel les premier et deuxième systèmes d'exploitation sont agencés pour partager l'utilisation de l'interface de réseau (118) ;
**caractérisé en ce que** l'interface de réseau fonctionne en utilisant un ensemble unique d'adresses de réseau communes aux deux systèmes d'exploitation ; et
**en ce que** le système comprend en outre un code exécutable pour fournir un canal de transmission de données pour communiquer des données en temps réel et des données de commande et/ou de supervision associées, dans lequel le code comprend :
un premier code fonctionnant dans ledit premier système d'exploitation pour communiquer lesdites données en temps réel, dans lequel ledit premier système d'exploitation est un système d'exploitation en temps réel agencé pour utiliser une pile de protocole UDP/IP afin de communiquer lesdites données en temps réel ; et
un deuxième code fonctionnant dans ledit deuxième système d'exploitation pour communiquer lesdits signaux de commande et/ou de supervision, dans lequel le deuxième système d'exploitation est un système d'exploitation polyvalent agencé pour utiliser une pile de protocole TCP/IP et pour communiquer lesdits signaux de commande et/ou de supervision, dans lequel la pile de protocole UDP/IP du premier système d'exploitation est agencée pour recevoir toutes les données entrantes et pour transférer sélectivement des données ayant des numéros de ports indiquant qu'elles sont destinées à des applications s'exécutant dans le deuxième système d'exploitation, à la pile de protocole TCP/IP du deuxième système d'exploitation.

2. Système selon la revendication 1, comprenant un ordonnanceur de transmission (258) qui est agencé pour transférer sélectivement des paquets de données sortants des premier et deuxième systèmes d'exploitation (201, 202) pour une transmission par l'intermédiaire de l'interface de réseau (118).

3. Système selon la revendication 2, dans lequel l'ordonnanceur de transmission (258) est agencé pour donner la priorité au premier système d'exploitation (201).

4. Système selon la revendication 2, dans lequel l'ordonnanceur de transmission (258) est agencé pour ne pas envoyer de paquets du deuxième système d'exploitation (202) pendant qu'il y a des paquets à transmettre du premier système d'exploitation (201).

5. Système selon la revendication 1, qui est agencé pour communiquer en utilisant des protocoles Internet.

6. Système selon la revendication 1, dans lequel lesdits premier et deuxième systèmes d'exploitation (201, 202) fonctionnent sur un seul processeur (102).

7. Système selon la revendication 6, comprenant un canal de communication entre systèmes d'exploitation (260) pour porter des messages entre lesdits premier et deuxième systèmes d'exploitation (201, 202) et/ou des applications s'exécutant dans ceux-ci (207, 208).

8. Système selon la revendication 1, dans lequel le premier système d'exploitation (201) comprend un premier sous-ensemble de ports d'adresses et le deuxième système d'exploitation (202) comprend un deuxième sous-ensemble de ports d'adresses, chacun desdits sous-ensembles comprenant au moins un port d'adresse, lesdits premier et deuxième sous-ensembles étant mutuellement exclusifs.

9. Système selon la revendication 1, dans lequel le deuxième système d'exploitation (202) fournit des commandes permettant à un utilisateur de configurer l'interface de réseau (118).

10. Système selon l'une quelconque des revendications précédentes mettant en oeuvre un système de communication de voix sur Internet.

11. Procédé destiné à fournir un accès de réseau à un ordinateur, comprenant la fourniture de premier et deuxième systèmes d'exploitation sur l'ordinateur, **caractérisé par** le partage d'une adresse de réseau et la permission aux dits systèmes d'exploitation de partager l'accès à une interface de réseau dudit ordinateur, et par la fourniture d'un code exécutable pour fournir un canal de transmission de données pour communiquer des données en temps réel et des signaux de commande et/ou de supervision associés, dans lequel le code comprend :
un premier code fonctionnant dans ledit premier système d'exploitation pour communiquer lesdites données en temps réel, dans lequel le premier système d'exploitation est un système d'exploitation en temps réel et agencé pour utiliser une pile de protocole UDP/IP afin de communiquer lesdites données en temps réel ; et
un deuxième code fonctionnant dans ledit deuxième système d'exploitation pour communiquer lesdits signaux de commande et/ou de supervision, dans lequel le deuxième système d'exploitation est un système d'exploitation polyvalent et agencé pour utiliser une pile de protocole TCP/IP et pour communiquer lesdits signaux de commande et/ou de supervision,
dans lequel ladite pile de protocole UDP/IP du premier système d'exploitation est agencée pour recevoir toutes les données entrantes et pour transférer sélectivement des données ayant des numéros de ports indiquant qu'elles sont destinées à des applications s'exécutant dans le deuxième système d'exploitation, à la pile de protocole TCP/IP du deuxième système d'exploitation.

12. Produit de programme informatique comprenant un code pour amener un ordinateur (100) à effectuer le procédé selon la revendication 11.
